# FASCICULE DE BREVET EUROPEEN

(11) **EP 3 475 123 B1**
(45) Date de publication et mention de la délivrance du brevet: **15.04.2020**
(21) Numéro de dépôt: 17732977.8
(22) Date de dépôt: 24.05.2017
(51) Int. Cl.: B60R 1/04

(54) **ENSEMBLE DE RETROVISEUR DE VEHICULE COMPRENANT UN DISPOSITIF DE FIXATION D'UNE CAMERA**
FAHRZEUGRÜCKSPIEGELANORDNUNG MIT EINER KAMERAMONTAGEVORRICHTUNG
VEHICLE REARVIEW MIRROR ASSEMBLY COMPRISING A CAMERA MOUNTING DEVICE

(30) Priorité: 28.06.2016 FR 1656030
(43) Date de publication de la demande: 01.05.2019
(73) Titulaire: PSA Automobiles S.A., 78300 Poissy (FR)
(72) Inventeur: MARTEAU, Cedric, 75011 Paris (FR)
(86) Numéro de dépôt international: PCT/FR2017/051300
(87) Numéro de publication internationale: WO 2018/002459

(56) Documents cités:
- WO-A1-2014/156228
- US-A1- 2013 250 113
- US-A1- 2015 334 454

## Description

L'invention concerne, de façon générale, l'intégration d'une caméra d'enregistrement dans un véhicule automobile, et plus particulièrement l'intégration d'une telle caméra au moyen d'un dispositif de fixation prévu sur le pied d'un rétroviseur central intérieur du véhicule.

L'invention porte plus particulièrement sur un ensemble de rétroviseur, en particulier de rétroviseur central intérieur, dont le pied comprend un dispositif de fixation d'une caméra.

Aujourd'hui, de plus en plus de véhicules embarquent une ou plusieurs caméras, dont une caméra frontale destinée à filmer la route et l'environnement du véhicule, notamment vers l'avant. Les images capturées par de telles caméras frontales sont notamment utilisées à des fins d'élucidation des motifs d'un accident, par exemple.

De telles caméras frontales sont généralement montées sur le parebrise par l'intermédiaire d'une embase collée.

La mise en œuvre de telles caméras frontales logées dans des embases collées sur le pare-brise engendre de nombreux inconvénients, dont des nuisances sonores et des vibrations engendrées par la fixation de la caméra sur l'embase, la nécessité de mettre en œuvre de nombreux éléments mécaniques, source de complexité, et la présence de caches volumineux en haut de parebrise susceptibles de dégrader la visibilité.

Le document WO2014/156228A1 décrit un ensemble de rétroviseur conformément au préambule de la revendication 1. Ce système comprend un dispositif de fixation d'une caméra sur le parebrise avant d'un véhicule, adapté au niveau du rétroviseur central intérieur, et destiné à se trouver fixé par collage sur la face intérieure du parebrise.

L'ensemble rétroviseur décrit dans le document WO2014/156228A1 présente par conséquent les inconvénients précités. En particulier, le collage sur le parebrise du véhicule entraîne un risque vibratoire, source de nuisance sonore, et engendre l'occultation d'une partie du parebrise, affectant la visibilité.

L'invention vise donc à résoudre ces inconvénients en proposant un ensemble de rétroviseur dont le pied est pourvu d'aménagements permettant de recevoir et de fixer une caméra directement sur ledit pied de rétroviseur, sans nécessiter le recours à une embase collée sur le parebrise.

Pour parvenir à ce résultat, la présente invention concerne un ensemble de rétroviseur de véhicule, formant en particulier un ensemble de rétroviseur central intérieur de véhicule, comportant un rétroviseur comprenant un pied et un boîtier, ledit pied étant notamment destiné à supporter une caméra, ledit pied comprenant :
- au moins une zone de contact destinée à recevoir, en appui, ladite caméra,
- une ouverture, pour permettre l'empiochage de la caméra en vue de son montage sur ledit pied,
- au moins un moyen de maintien pour assurer le maintien de la caméra sur ledit pied,
- le pied comprenant un logement pour recevoir la caméra, ledit logement présentant une face arrière, située du côté du boîtier et reliée mécaniquement audit boîtier, deux faces latérales, orthogonales à la face arrière et reliées mécaniquement à ladite face arrière, une face du dessous et une face du dessus, destinées respectivement à supporter et à maintenir la caméra, l'avant du logement étant ouvert pour permettre l'insertion de la caméra,
- l'ouverture étant aménagée dans la face du dessus et la face arrière supporte, du côté de la caméra, c'est-à-dire du côté opposé au boîtier, ladite au moins une zone de contact,
- le pied comprenant au moins une nervure s'étendant longitudinalement depuis la face arrière vers l'avant du logement, issue de matière du pied, l'extrémité de la nervure opposée à la face arrière formant ladite au moins une zone de contact, et en ce que ledit pied comprend trois nervures s'étendant longitudinalement depuis la face arrière vers l'avant du logement, issues de matière du pied, une première nervure s'étendant le long de la face du dessus et une deuxième et une troisième nervures s'étendant le long de chaque face latérale, respectivement, les extrémités de chaque nervure formant une zone de contact, lesdites trois zones de contact permettant de réaliser un appui plan isostatique de la caméra.

Grâce à l'invention, l'ensemble de rétroviseur, comprenant de préférence un rétroviseur central intérieur, comprend les moyens pour intégrer à son pied une caméra frontale de façon efficace, sans engendrer de risque de vibrations ni de nuisances sonores, en l'absence d'embase collée sur le parebrise.

Avantageusement, le pied comprend deux clips symétriques aménagés respectivement sur chaque face latérale du logement, pour assurer le maintien de la caméra dans ledit logement.

Avantageusement, l'ensemble de rétroviseur comprend par ailleurs un écrou-pince et une vis assurant la fixation de la caméra dans le logement.

Avantageusement, l'ensemble de rétroviseur comprend la caméra, ladite caméra étant insérée dans le logement et montée sur le pied.

Avantageusement, l'ensemble de rétroviseur comprend un cache pour masquer au moins le pied.

L'invention concerne également un véhicule automobile comprenant un ensemble de rétroviseur tel que brièvement décrit ci-dessus.

D'autres caractéristiques et avantages de l'invention apparaîtront à la lecture de la description détaillée des modes de réalisation de l'invention, donnés à titre d'exemple uniquement, et en référence aux dessins qui montrent :
- la figure 1, une vue de face du pied d'un ensemble de rétroviseur selon l'invention,
- la figure 2, une vue de trois-quarts du pied d'un ensemble de rétroviseur selon l'invention,
- la figure 3, une vue de côté d'une caméra fixée sur un pied d'un ensemble de rétroviseur selon l'invention,
- la figure 4, une vue de côté d'un ensemble de rétroviseur selon l'invention, avec une caméra intégrée.

Dans ce qui va suivre, les modes de réalisation décrits s'attachent plus particulièrement à une mise en œuvre de l'ensemble de rétroviseur selon l'invention au sein d'un véhicule automobile. Cependant, toute mise en œuvre dans un contexte différent, en particulier dans tout type de véhicule, est également visée par la présente invention.

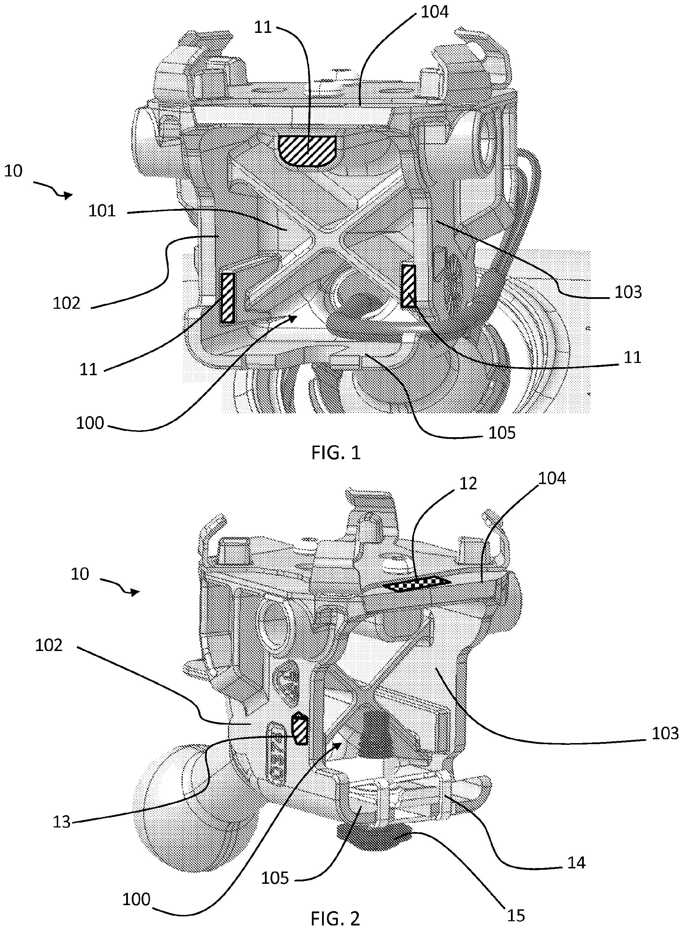

En référence au mode de réalisation représenté sur les figures 1 à 4, la présente invention concerne un ensemble de rétroviseur 1 comprenant un pied 10 et un boîtier 2, ledit pied 10 étant configuré pour recevoir une caméra frontale 3. Le pied 10 de l'ensemble de rétroviseur 1 est par ailleurs destiné à se trouver fixé, par l'intermédiaire d'une embase collée, au parebrise d'un véhicule, l'ensemble supportant le rétroviseur central intérieur du véhicule et la caméra frontale, cette dernière capturant des images vers l'avant du véhicule, à travers le parebrise avant.

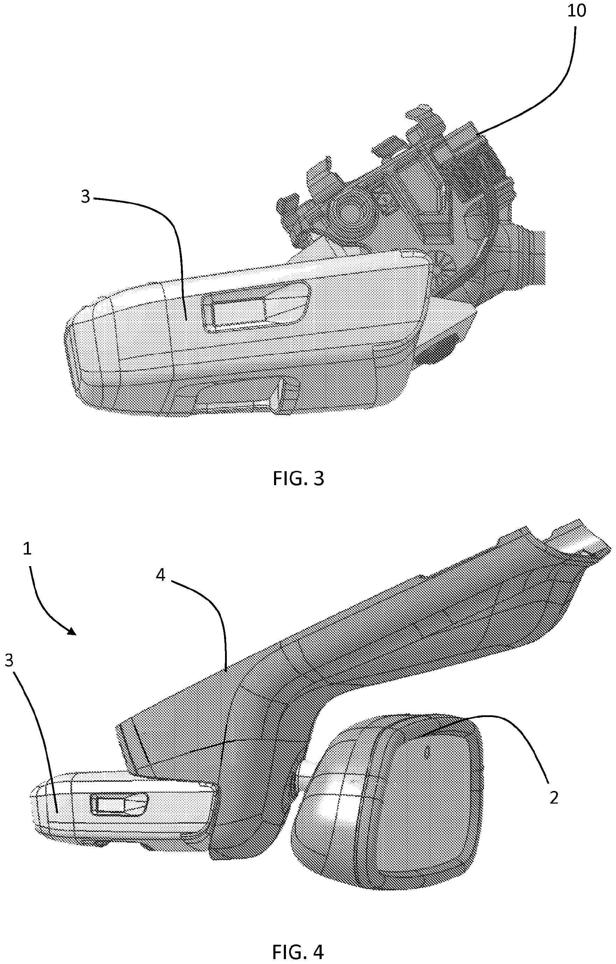

Comme représenté à la figure 4, le boîtier 2 comprend ainsi une structure de maintien d'un miroir assurant la fonction de rétroviseur central intérieur du véhicule.

Le pied 10 de l'ensemble de rétroviseur 1 assure par conséquent la liaison et la fixation dudit boîtier 2 à l'intérieur de l'habitacle d'un véhicule, via une embase collée au parebrise avant du véhicule, comme cela est usuel dans l'état de la technique.

Selon l'invention, le pied 10 de l'ensemble de rétroviseur 1 comprend par ailleurs des moyens spécifiques destinés à recevoir et à intégrer la caméra frontale 3 destinée à capturer des images, en particulier de l'environnement vers l'avant du véhicule, à travers le parebrise avant.

A cette fin, selon le mode de réalisation représenté sur les figures 1 à 4, le pied 10 de l'ensemble de rétroviseur 1 comporte un logement 100 pour recevoir la caméra 3 et comprend des moyens adaptés pour le montage, le maintien et la fixation de ladite caméra 3 sur ledit pied 10.

A cette fin, selon le mode de réalisation représenté en particulier sur les figures 1 et 2, le pied 10 de l'ensemble de rétroviseur 1 comporte un logement 100 adapté pour recevoir la caméra 3, ledit logement 100 étant configuré pour envelopper partiellement ladite caméra 3.

Ainsi, le logement 100 comprend une face arrière 101, du côté du boîtier 2, deux faces latérales 102, 103, orthogonales à la face arrière 101, une face du dessus 104 et une face du dessous 105, la caméra 3 étant destinée à être insérée dans le logement 100 par l'avant du logement, du côté opposé à la face arrière 101.

Selon le même mode de réalisation, le pied 10 de l'ensemble de rétroviseur 1 comprend une pluralité de zones de contact 11 spécifiques prévues pour recevoir en appui la caméra 3. En particulier, selon le mode de réalisation non limitatif représenté en particulier sur les figures 1 et 2, les zones de contact 11 forment les extrémités de nervures issues de matière du pied 10, lesdites nervures s'étendant longitudinalement vers l'avant du logement 100 depuis la face arrière 101 du pied, située du côté du rétroviseur, respectivement le long des faces latérales 102, 103 et de la face du dessus 104 du logement 100. Ainsi, la caméra 3 s'insère dans le logement 100, entre les faces latérales 102, 103, du dessus 104 et du dessous 105 jusqu'à se trouver en appui contre les zones de contact 11 qui s'étendent depuis la face arrière 101. Lesdites zones de contact 11 sont de préférence au nombre de trois, permettant ainsi de réaliser un appui plan isostatique de la caméra 3.

Selon l'invention, pour permettre l'empiochage de la caméra 3 en vue de son montage sur le pied 10, ledit pied 10 comprend par ailleurs une ouverture 12, de forme rectangulaire et aménagée sur la face du dessus 104 selon le mode de réalisation visible sur la figure 2.

Pour assurer le maintien de la caméra 3 dans le logement 100, le pied 10 de l'ensemble de rétroviseur 1 comprend par ailleurs des moyens de maintien 13 de la caméra 3, consistant, sur le mode de réalisation des figures 1 et 2, en deux clips 13 symétriques aménagés sur les faces latérales 102, 103 du logement 100.

Pour assurer la fixation de la caméra 3 dans le logement 100, selon le mode de réalisation représenté sur la figure 2, un écrou-pince 14 et une vis 15 sont mis en œuvre après insertion de ladite caméra 3 dans ledit logement 100.

La figure 3 montre une vue partielle de l'ensemble de rétroviseur (le rétroviseur en tant que tel, formé du boîtier 2 et d'un miroir, n'étant pas représenté) selon l'invention, une fois la caméra 3 fixée dans le logement 100 du pied 10.

Sur la figure 4, la caméra 3 est montée sur le pied 10 de l'ensemble de rétroviseur 1. Le boîtier 2 du rétroviseur est également monté sur ledit pied 10. Par ailleurs, un cache 4 est installé pour masquer le dispositif de fixation et le pied 10 de l'ensemble. Il est à noter que ce cache 4, éventuellement formé d'une pluralité de pièces, est moins volumineux que les caches de l'état de la technique et surtout qu'il ne constitue pas un élément d'occultation partielle du parebrise.

En résumé, la présente invention concerne un ensemble de rétroviseur 1 dont le pied 10 intègre des moyens pour recevoir, maintenir et fixer une caméra frontale 3, de façon à former un ensemble monobloc constitué dudit pied 10 sur lequel sont montés, d'une part, le boîtier 2 du rétroviseur lui-même et, d'autre part, la caméra frontale 3.

Le pied 10 est par ailleurs destiné à se trouver fixé, par des moyens adaptés, à une embase collée au parebrise, à l'intérieur d'un habitacle de véhicule, et à être masqué par l'intermédiaire d'un cache 4.

Grâce à l'invention, la caméra frontale est par conséquent intégrée à un élément existant, à savoir l'ensemble de rétroviseur central intérieur, et ne nécessite pas le recours à une embase collée sur le parebrise, source de vibrations et de nuisances sonores.

## Revendications

1. Ensemble de rétroviseur (1) de véhicule, formant en particulier un ensemble de rétroviseur central intérieur de véhicule, comportant un rétroviseur comprenant un pied (10) et un boîtier (2), ledit pied (10) étant notamment destiné à supporter une caméra (3), ledit pied (10) comprenant :
- au moins une zone de contact (11) destinée à recevoir, en appui, ladite caméra (3),
- une ouverture (12), pour permettre l'empiochage de la caméra (3) en vue de son montage sur ledit pied (10),
- au moins un moyen de maintien (13) pour assurer le maintien de la caméra (3) sur ledit pied (10),
- un logement (100) pour recevoir la caméra (3), ledit logement (100) présentant une face arrière (101), située du côté du boîtier (2) et reliée mécaniquement audit boîtier (2), deux faces latérales (102, 103), orthogonales à la face arrière (101) et reliées mécaniquement à ladite face arrière (101), une face du dessous (105) et une face du dessus (104), destinées respectivement à supporter et à maintenir la caméra (3), l'avant du logement (100) étant ouvert pour permettre l'insertion de la caméra (3)
- l'ouverture (12) est aménagée dans la face du dessus (104) et dans lequel la face arrière (101) supporte, du côté de la caméra (3), c'est-à-dire du côté opposé au boîtier (2), ladite au moins une zone de contact (11),
- au moins une nervure s'étendant longitudinalement depuis la face arrière (101) vers l'avant du logement (100), issue de matière du pied (10), l'extrémité de la nervure opposée à la face arrière (101) formant ladite au moins une zone de contact (11),
- **caractérisé en ce que** le pied (10) comprend trois nervures s'étendant longitudinalement depuis la face arrière (101) vers l'avant du logement (100), issues de matière du pied (10), une première nervure s'étendant le long de la face du dessus (104) et une deuxième et une troisième nervures s'étendant le long de chaque face latérale (102, 103), respectivement, les extrémités de chaque nervure formant une zone de contact (11), lesdites trois zones de contact (11) permettant de réaliser un appui plan isostatique de la caméra (3).

2. Ensemble de rétroviseur (1) selon la revendication 1, dans lequel le pied (10) comprend deux clips symétriques (13) aménagés respectivement sur chaque face latérale (102, 103) du logement (100), pour assurer le maintien de la caméra (3) dans ledit logement (100).

3. Ensemble de rétroviseur (1) selon l'une des revendications 1 ou 2, comprenant par ailleurs un écrou-pince (14) et une vis (15) assurant la fixation de la caméra (3) dans le logement (100).

4. Ensemble de rétroviseur (1) selon l'une des revendications précédentes, comprenant la caméra (3) insérée dans le logement (100) et montée sur le pied (10).

5. Ensemble de rétroviseur (1) selon l'une des revendications précédentes, comprenant un cache (4) pour masquer au moins le pied (10).

6. Véhicule automobile comprenant un ensemble de rétroviseur (1) selon l'une des revendications précédentes.

## Patentansprüche

1. Fahrzeugrückspiegelanordnung (1), die insbesondere eine zentrale innere Fahrzeugrückspiegelanordnung bildet, die einen Rückspiegel umfasst, der einen Fuß (10) und ein Gehäuse (2) umfasst, wobei der Fuß (10) insbesondere dazu bestimmt ist, eine Kamera (3) zu tragen, wobei der Fuß (10) Folgendes umfasst:
- mindestens eine Kontaktzone (11), die dazu bestimmt ist, die Kamera (3) in Auflage zu erhalten,
- eine Öffnung (12), um das Einfügen der Kamera (3) zu ihrer Montage auf dem Fuß (10) zu erlauben,
- mindestens ein Haltemittel (13), um das Halten der Kamera (3) sicherzustellen,
- eine Aufnahme (100), um die Kamera (3) aufzunehmen, wobei die Aufnahme (100) eine Rückseitenfläche (101) aufweist, die auf der Seite des Gehäuses (2) liegt und mechanisch mit dem Gehäuse (2) verbunden ist, zwei Seitenflächen (102, 103), die zu der Rückseitenfläche (101) orthogonal und mechanisch mit der Rückseitenfläche (101) verbunden sind, eine Unterseitenfläche (105) und eine Oberseitenfläche (104), die jeweils dazu bestimmt sind, die Kamera (3) zu tragen und zu halten, wobei die Vorderseite der Aufnahme (100) offen ist, um das Einsetzen der Kamera (3) zu erlauben,
- wobei die Öffnung (12) in der Oberseitenfläche (104) eingerichtet ist, und wobei die Rückseitenfläche (101) auf der Seite der Kamera (3), das heißt auf der Seite, die dem Gehäuse (2) entgegengesetzt ist, die mindestens eine Kontaktzone (11) trägt,
- mindestens eine Rippe, die sich längs von der Rückseitenfläche (101) zu der Vorderseite der Aufnahme (100) erstreckt, die aus einem Stück mit dem Fuß (10) besteht, wobei das Ende der Rippe, das der Rückseitenfläche (101) entgegengesetzt ist, die mindestens eine Kontaktzone (11) bildet,
**dadurch gekennzeichnet, dass** der Fuß (10) mindestens drei Rippen umfasst, die sich längs von der Rückseitenfläche (101) zu der Vorderseite der Aufnahme (100) erstrecken, die aus einem Stück mit dem Fuß (10) bestehen, wobei sich eine erste Rippe entlang der Oberseitenfläche (104) erstreckt, und eine zweite und eine dritte Rippe sich jeweils entlang jeder Seitenfläche (102, 103) erstrecken, wobei die Enden jeder Rippe eine Kontaktzone (11) bilden, wobei die drei Kontaktzonen (11) das Herstellen einer flachen isostatischen Auflage der Kamera (3) erlauben.

2. Rückspiegelanordnung (1) nach Anspruch 1, wobei der Fuß (10) zwei symmetrische Clips (13) umfasst, die jeweils auf jeder Seitenfläche (102, 103) der Aufnahme (100) eingerichtet sind, um das Halten der Kamera (3) in der Aufnahme (100) sicherzustellen.

3. Rückspiegelanordnung (1) nach einem der Ansprüche 1 oder 2, die außerdem eine Klemmmutter (14) und eine Schraube (15) umfasst, die die Befestigung der Kamera (3) in der Aufnahme (100) sicherstellen.

4. Rückspiegelanordnung (1) nach einem der vorstehenden Ansprüche, die die Kamera (3) umfasst, die in die Aufnahme (100) eingesetzt und auf dem Fuß (10) montiert ist.

5. Rückspiegelanordnung (1) nach einem der vorstehenden Ansprüche, die eine Abdeckung (4) umfasst, um mindestens den Fuß (10) zu verbergen.

6. Kraftfahrzeug, das eine Rückspiegelanordnung (1) nach einem der vorstehenden Ansprüche umfasst.

## Claims

1. A vehicle rearview mirror assembly (1), forming in particular a vehicle interior central rearview mirror assembly, comprising a rearview mirror including a base (10) and a casing (2), said base (10) being in particular intended to support a camera (3), said base (10) including:
- at least one contact region (11) intended to receive, supportingly, said camera (3),
- an opening (12) to permit the hooking-in of the camera (3) for the purpose of it being mounted on said base (10),
- at least one retaining means (13) to ensure the retaining of the camera (3) on said base (10),
- a housing (100) to receive the camera (3), said housing (100) having a rear face (101), situated on the side of the casing (2) and mechanically connected to said casing (2), two lateral faces (102, 103) orthogonal to the rear face (101) and mechanically connected to said rear face (101), a bottom face (105) and a top face (104), intended respectively to support and retain the camera (3), the front of the housing (100) being open to permit the insertion of the camera (3),
- the opening (12) is arranged in the top face (104) and in which the rear face (101) bears, on the side of the camera (3), i.e. on the side opposite the casing (2), said at least one contact region (11),
- at least one rib extending longitudinally from the rear face (101) towards the front of the housing (100), made of the same material as the base (10), the end of the rib opposite the rear face (101) forming said at least one contact region (11),
**characterized in that** the base (10) includes three ribs extending longitudinally from the rear face (101) towards the front of the housing (100), made of the same material as the base (10), a first rib extending along the top face (104) and a second and a third rib extending along each lateral face (102, 103), respectively, the ends of each rib forming a contact region (11), said three contact regions (11) permitting an isostatic planar support of the camera (3) .

2. The rearview mirror assembly (1) according to Claim 1, in which the base (10) includes two symmetrical clips (13) arranged respectively on each lateral face (102, 103) of the housing (100), to ensure the retaining of the camera (3) in said housing (100).

3. The rearview mirror assembly (1) according to one of Claims 1 or 2, further including a nut-clip (14) and a screw (15) ensuring the fixing of the camera (3) in the housing (100).

4. The rearview mirror assembly (1) according to one of the preceding claims, including the camera (3) inserted in the housing (100) and mounted on the base (10).

5. The rearview mirror assembly (1) according to one of the preceding claims, including a cover (4) to mask at least the base (10).

6. A motor vehicle including a rearview mirror assembly (1) according to one of the preceding claims.
